# EUROPÄISCHE PATENTSCHRIFT

(11) **EP 0 784 069 B1**
(45) Veröffentlichungstag und Bekanntmachung des Hinweises auf die Patenterteilung: **13.08.2003**
(21) Anmeldenummer: 96120039.1
(22) Anmeldetag: 13.12.1996
(51) Int. Cl.: C08J 3/12, B29C 43/00

(54) **Nichtrieselfähige Formpulver aus modifizierten Polytetrafluorethylenen**
Moulding powder of modified polytetrafluoroethylene which is not free flowing
Poudre de moulage à base d'un polytetrafluoroéthylène ne s'écoulant pas librement

(30) Priorität: 21.12.1995 DE 19547907
(43) Veröffentlichungstag der Anmeldung: 16.07.1997
(73) Patentinhaber: Dyneon GmbH & Co. KG, 84504 Burgkirchen (DE)
(72) Erfinder: Löhr, Gernot, Dr., 84508 Burgkirchen (DE); Hintzer, Klaus, Dr., 84556 Kastl (DE); Sulzbach, Reinhard Albert, Dr., 84489 Burghausen (DE)
(74) Vertreter: Voortmans, Gilbert J.L.

(56) Entgegenhaltungen:
- EP-A- 0 649 863
- DE-A- 2 147 568
- DE-A- 2 340 412
- DE-A- 2 416 452
- CHEMICAL ABSTRACTS, vol. 80, no. 18, 6.Mai 1974 Columbus, Ohio, US; abstract no. 96951, "Powdery tetrafluoroethylene resin" XP002045054 & JP 48 017 660 A (DENKI KK)

## Beschreibung

Die Erfindung betrifft nichtrieselfähige Formpulver aus einem Suspensionspolymerisat mit Einheiten des Tetrafluorethylens und 0,01 bis 1 Gew.-%, vorzugsweise 0,02 bis 0,5 Gew.-%, an Einheiten mindestens eines Perfluor(alkyl-vinyl)ethers mit einer Alkylgruppe von 1 bis 4 Kohlenstoffatomen, vorzugsweise n-Perfluorpropyl, mit einem Schüttgewicht von mindestens 450 g/l, erhältlich durch Mahlen der Primärpartikel auf einen mittleren Korndurchmesser d₅₀ von 10 bis 50 µm, vorzugsweise 15 bis 25 µm, insbesondere 20 µm, und Reagglomerieren in Wasser zu einem nichtstaubenden Agglomerat mit einem Teilchendurchmesser d₅₀ von 30 bis 100 µm, vorzugsweise 40 bis 90 µm.

Die Erfindung betrifft weiterhin ein Verfahren zur Herstellung eines nichtrieselfähigen, nichtstaubenden Formpulvers mit einem Schüttgewicht von mindestens 450 g/l und einem Agglomeratdurchmesser d₅₀ von 30 bis 100 µm, vorzugsweise 40 bis 90 µm, das dadurch gekennzeichnet ist, daß man ein Suspensionspolymerisat mit Einheiten des Tetrafluorethylens und 0,01 bis 1 Gew.-%, vorzugsweize 0,02 bis 0,5 Gew.-%, an Einheiten mindestens eines Perfluor(alkyl-vinyl)ethers mit einer Alkylgruppe von 1 bis 4 Kohlenstoffatomen auf einen Korndurchmesser d₅₀ von 10 bis 50 µm, vorzugsweize von 15 bis 25 µm, mahlt und in Wasser agglomeriert.

Die Erfindung betrifft weiterhin die Verwendung der erfindungsgemäßen Formpulver in der Preß-Sinter-Technik.

Bekanntlich kann Polytetrafluorethylen (PTFE) durch wäßrige radikalische Polymerisation nach zwei verschiedenen Verfahren hergestellt werden, nämlich der Suspension- und der Emulsionspolymerisation. Diese beiden Verfahren führen naturgemäß zu morphologisch grundsätzlich verschiedenen Polymerisaten. Dies hat zur Konsequenz, daß die beiden Verfahren auch grundsätzlich verschiedene Aufarbeitungs- und Verarbeitungsverfahren erfordern.

Die Emulsionspolymerisate bestehen aus weitgehend regulären, sphärischen Latexpartikeln mit einem Durchmesser von etwa 100 bis 300 nm, die durch einen Fällprozeß zu einem sogenannten Pastenpulver mit einem mittleren Korndurchmesser von 400 bis 700 µm agglomeriert werden. Die spezifische Oberfläche solcher Pastenpulver liegt bei 10 bis 25 m²/g. Diese Pastenpulver werden nach dem sogenannten Pastenextrusionsverfahren zu Auskleidungen (Linern), Rohren, Schläuchen und Bändern weiterverarbeitet. Das Charakteristikum der Pastenextrusion ist, daß die Formgebung durch Anteigen des Pastenpulvers mit Benzin oder anderen mit Wasser nicht mischbaren, aber das PTFE benetzenden Flüssigkeiten mit einem Pastenextruder weit unterhalb des PTFE-Schmelzpunktes durchgeführt wird. Dieser formgebenden Extrusion folgt meist eine Sinterung bei Temperaturen deutlich oberhalb des PTFE-Schmelzpunktes. PTFE-Emulsionspolymerisate sind also aufgrund ihrer außergewöhnlich hohen Schmelzviskosität von bis zu einigen 100 GPas nicht thermoplastisch verarbeitbar.

Auch PTFE-Suspensionspolymerisate sind aufgrund ihrer hohen Schmelzviskosität nicht thermoplastisch verarbeitbar. Es wurden deshalb spezielle Verarbeitungstechniken entwickelt, die sich an metallurgische Preß-Sinter-Techniken anlehnen. Für diese Preß-Sinter-Technik muß das Suspensionspolymerisat in ein einsetzbares Formpulver umgearbeitet werden.

Das Suspensionspolymerisat, das in groben, unregelmäßig geformten Körnern mit einem Durchmesser bis 1500 µm anfällt, wird zu diesem Zweck zunächst auf einen Korndurchmesser von etwa 10 bis 50 µm, vorzugsweise durch Trockenmahlung, insbesondere in einer Luftmühle, fein gemahlen. Das Mahlgut ist ebenfalls unregelmäßig geformt. Dadurch ist das so erzeugte Formpulver nicht rieselfähig und für eine automatische Preßverarbeitung nicht ausreichend dosierbar. Das Schüttgewicht liegt bei etwa 300 bis 400 g/l.

Dieses nichtrieselfähige Formpulver wird überwiegend zu Zylindern oder Hohlzylindern bei Drücken bis zu etwa 500 bar verpreßt. Die Preßlinge (Grünlinge) werden anschließend gesintert und dann durch mechanische Verarbeitung Gebrauchsartikel wie Schälfolien oder Dichtungsringe hergestellt. Um hochwertige Endeigenschaften zu erzielen, muß das Formpulver bei der Herstellung des Grünlings eine hinreichende Deformierbarkeit aufweisen, damit die Primärpartikel dicht und ohne Lufteinschlüsse aneinander gepackt werden können und so der Grünling eine hinreichende sogenannte Grünfestigkeit zur weiteren Verarbeitung aufweist.

Das nichtrieselfähige Formpulver hat neben seiner Unbrauchbarkeit für automatische Preßverarbeitung und den Schwierigkeiten einer sicheren Formfüllung den weiteren Nachteil eines niedrigen Schüttgewichts. Hierdurch werden größere Formgebungsanlagen erforderlich. Ein weiterer Nachteil ist im Stauben bei der Herstellung des Grünlings zu sehen. Das Stauben erzwingt einen höheren Aufwand für Reinhaltung der Verarbeitungsanlage, zumal PTFE-Staub insbesondere im Zusammenhang mit Rauchen als toxisch gilt.

Es hat deshalb nicht an Versuchen gefehlt, die genannten Nachteile zu beseitigen. So sind Verfahren entwickelt worden, das Formpulver durch Agglomerierverfahren rieselfähig und leichter dosierbar zu machen. Die bekannten Agglomerierverfahren bestehen im wesentlichen darin, daß in einem meist zweiphasigen Flüssigkeitssystem (bestehend aus Wasser und einem mit Wasser begrenzt mischbaren, PTFE benetzenden Lösemittel wie Benzine und Fluorchlorkohlenwasserstoffe) durch eine geeignete mechanische Behandlung das nichtrieselfähige Formpulver zu mehr oder weniger regelmäßig geformten Granulatkörnern agglomeriert wird, deren mittlerer Korndurchmesser zwischen 100 und 600 µm liegt. Diese Granulatkörner zeichnen sich durch eine glatte Oberfläche und eine gewisse Kornstabilität für ihre Handhabung und den Transport aus. Die so erzeugten rieselfähigen Formpulver haben ein hohes Schüttgewicht, meist über 800 g/l, stauben nicht und bieten demgemäß erhebliche Vorteile gegenüber dem nichtrieselfähigen Formpulver.

Diese Vorteile werden aber durch eine deutliche Verschlechterung des Eigenschaftsprofils erkauft. So wird die Reißfestigkeit und die elektrische Durchschlagsfestigkeit deutlich erniedrigt und die gesinterten Artikel haben einen höheren Gehalt an Leerstellen (Voids), also mehr Poren bis hin zu sogenannten "Pinholes". Die Ursache für die Eigenschaftsverschlechterung ist die durch die Agglomerierung zwangsläufig schlechtere Verpreßbarkeit und Deformierbarkeit des rieselfähigen Pulvers. So kann man beispielsweise bei 100 µm dicken Schälfolien unter dem Mikroskop bei 20facher Vergrößerung im Phasenkontrast deutlich die Konturlinien des Granulatkorns erkennen.

In der folgenden Tabelle 1 wird die Eigenschaftsveränderung durch Granulierung eines PTFE-Formpulvers gezeigt, wobei die Abkürzungen hier und im folgenden die nachstehend genannten Bedeutungen haben:
- SG:: Schüttgewicht nach DIN 53466 beziehungsweise ISO 12086 in g/l
- d₅₀:: mittlerer Korndurchmesser in µm, gemessen mit einem Laser-Partikelmeßgerät der Firma Sympatec (Clausthal-Zellerfeld, Deutschland)
- RF:: Reißfestigkeit in N/mm², nach DIN 53457 beziehungsweise ISO 12086, Probekörper: 15 mm breite Streifen
- RD:: Reißdehnung in %, bestimmt nach DIN 53457 beziehungsweise ISO 12086
- EDF:: elektrische Durchschlagsfestigkeit in kV/mm, nach DIN 53481, Meßanordnung Kugel (Durchmesser 20 mm)/ Platte (Durchmesser 50 mm)

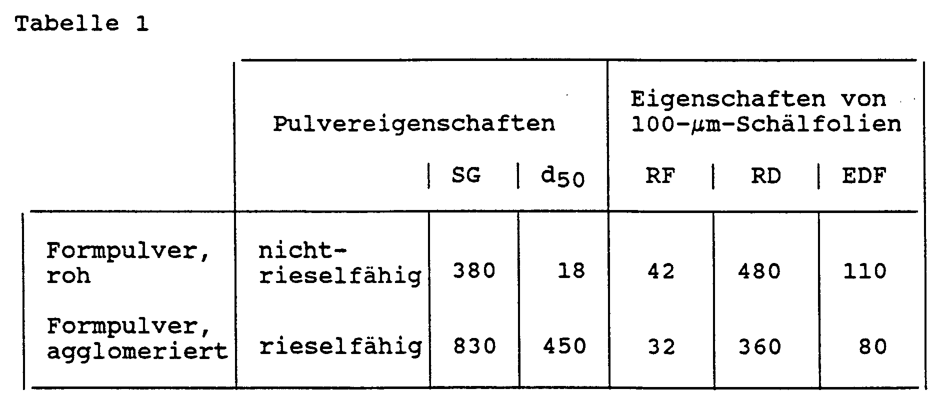

Die Eigenschaftsverschlechterung erscheint systemimmanent, da die geforderte Kornstabilität die dichte Packung der Primärpartikel und der Granulatkörner bei der Verpressung behindert. Diese Eigenschaftsverschlechterung wird auch bei der Granulierung eines Formpulvers aus "modifiziertem" PTFE beobachtet, wenn auch in geringerem Ausmaß. Unter "modifiziertem" PTFE wird ein Polymerisat verstanden, das geringe Anteile an Comonomeren enthält, wobei aber die Haupteigenschaft des PTFE beibehalten wird, nicht thermoplastisch verarbeitbar zu sein. Die erfindungsgemäß eingesetzten Suspensionspolymerisate des Tetrafluorethylens mit 0,01 bis 1 Gew.-% an Einheiten mindestens eines Perfluor(alkyl-vinyl)ethers sind solche "modifizierten" Polytetrafluorethylene. Ein Charakteristikum der modifizierten Suspensionspolymerisate ist ihre um etwa ein bis zwei Größenordnungen niedrigere Schmelzviskosität, durch die beispielsweise ihre Verschweißbarkeit ohne Hilfsmittel ermöglicht wird. Die erniedrigte Schmelzviskosität führt beim Sintern zwar zu einer besseren Koaleszens der Primärpartikel, jedoch können die systemimmanenten Nachteile der Agglomerierung noch nicht überwunden werden, wie die folgende Tabelle 2 an einem Suspensionspolymerisat mit 0,09 Gew.-% Perfluor(n-propyl-vinyl)ether zeigt.

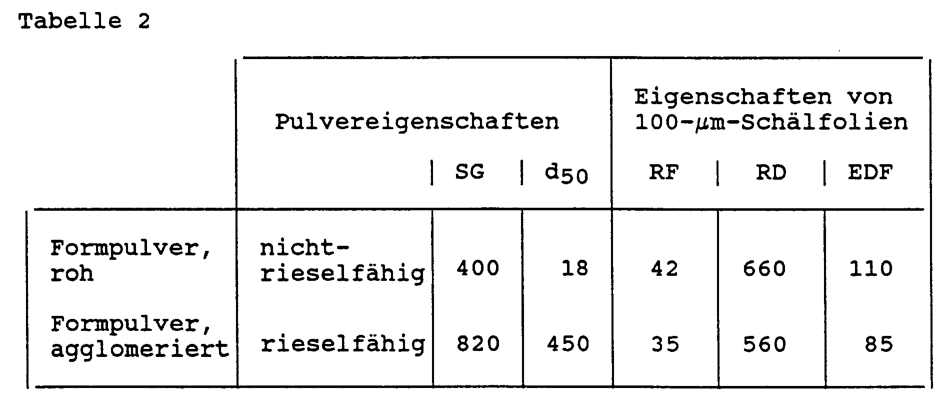

Das rieselfähige Formpulver führt - wie aus den Schälfolien ersichtlich - nicht zu dem hohen Eigenschaftsprofil der nichtrieselfähigen Formpulver.

Es bestand deshalb die Aufgabe, ein Formpulver zu entwickeln, das zwar nicht rieselfähig ist, aber gegenüber den bekannten Formpulvern Verarbeitungsvorteile bietet, insbesondere ein höheres Schüttgewicht und die staubfreie Handhabung bei der Herstellung der Grünlinge.

Diese Aufgabe wird erfindungsgemäß dadurch gelöst, daß an sich bekannte Formpulver aus modifiziertem Suspensions-PTFE einer mechanischen Behandlung in Gegenwart von Wasser unterworfen werden. Auf Granulierhilfsmittel wie organische Lösemittel kann hierbei verzichtet werden. Flüchtige Emulgatoren wie das Ammoniumsalz der Perfluoroctansäure (Perfluorcapronsäure) können als Hilfsmittel zugesetzt werden, sind aber nicht notwendig. Auf eine reguläre Ausformung des Granulatkorns wird hierbei bewußt verzichtet.

Die Granulierung in Wasser als Medium ist für nichtmodifiziertes PTFE aus der US-A-3 366 615 bekannt, wobei ein rieselfähiges Produkt erzeugt wird.

Die US-A-3 855 191 betrifft nichtrieselfähige Formpulver aus modifiziertem PTFE, das mit relativ hohen Mengen an fluoriertem Dispergiermittel hergestellt und anschließend auf eine relativ breite Korngrößenverteilung naß vermahlen wurde. Solche Produkte zeigen eine lästige Staubentwicklung bei der Verarbeitung. Die Möglichkeit einer Agglomerierung in Wasser, organischen Lösemitteln oder einer Mischung davon wird zwar erwähnt, jedoch zum Zweck der Verbesserung der Rieselfähigkeit.

Eine Erhöhung des Schüttgewichts kann zwar auch dadurch erzielt werden, daß die Polymerisate auf einen mittleren Korndurchmesser > 50 µm gemahlen werden und auf die Agglomerierung verzichtet wird. Diese Produkte zeigen aber ebenfalls eine lästige Staubentwicklung. Wird ein auf einen mittleren Korndurchmesser > 50 µm gemahlenes Produkt im Sinne der Erfindung agglomeriert, so erhält man daraus Schälfolien, die optisch inhomogen sind. Auch die mechanischen Eigenschaften sind deutlich schlechter als bei aus erfindungsgemäßen Formpulvern erhaltenen Produkten.

Ein nichtstaubendes, nichtrieselfähiges Formpulver aus modifiziertem Suspensions-PTFE mit einem hohen Schüttgewicht ist somit nach den bisher bekannten Verfahren und auch nach Modifikationen des eingangs definierten erfindungsgemäßen Verfahrens nicht herstellbar.

Die Erfindung wird in den folgenden Beispielen noch näher erläutert.

### Beispiele 1 bis 4

Allgemeine Versuchsdurchführung:
In einem zylindrischen 15-1-Glasgefäß (160 x 300 mm), ausgerüstet mit einem Blattstromstörer und einem 3-Blatt-Propellerrührer, das 4 l Wasser enthält, wird ein fein gemahlenes, modifiziertes Suspensions-PTFE (wie im folgenden definiert) unter Rühren eingetragen und 70 Minuten weitergerührt. Das so erhaltene agglomerierte Formpulver wird durch Sieben vom Wasser abgetrennt und bei 180 °C im Trockenschrank 8 Stunden getrocknet.

Das Stauben der Formpulver wird visuell beurteilt, indem die Staubbildung einer mit Formpulver halbgefüllten 500-ml-Glasflasche beobachtet wird, wenn sie auf den Kopf gestellt wird.

Die Endeigenschaften werden an Schälfolien gemessen. Diese entstammen einem 13 kg schweren zylindrischen Block, der in bekannter Weise verpreßt und gesintert wurde. Das granulierte Material wird in diesem Block schichtweise mit dem Ausgangsmaterial verpreßt. Damit können Veränderungen der Endeigenschaften bei der Agglomerierung besser beurteilt werden.

In der folgenden Tabelle 3 werden die Eigenschaften von Ausgangsformpulvern aufgeführt. Hierbei wird zum Vergleich unmodifiziertes PTFE als "Formpulver A" einem mit 0,05 Gew.-% Perfluor(n-propyl-vinyl)ether modifiziertem PTFE als "Formpulver B" gegenübergestellt. Das "Formpulver B" ist das Ausgangsmaterial für die erfindungsgemäßen Formpulver.

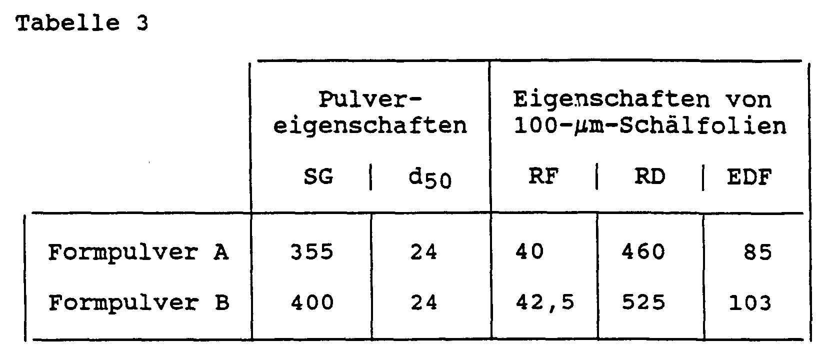

### Vergleichsbeispiele 1 bis 4

2,5 kg Formpulver A wurden in 4 l Wasser bei 1000 Upm gerührt. Bei den Vergleichsbeispielen 3 und 4 wurde in Gegenwart von 4 g Ammoniumperfluorcaprylat gearbeitet. Die Ergebnisse zeigt die Tabelle 4.

**Tabelle 4**

| Vergleichsbeispiel | Temperatur [°C] | Pulvereigenschaften | | Eigenschaften von 100-µm-Schälfolien | | |
|---|---|---|---|---|---|---|
| | | SG | d₅₀ | RF | RD | EDF |
| 1 | 45 | 670 | 62 | 40 | 410 | 70 |
| 2 | 25 | 490 | 74 | 41 | 490 | 107 |
| 3 | 45 | 530 | 85 | 39 | 400 | 70 |
| 4 | 25 | 490 | 86 | 39 | 410 | 75 |

Die so erhaltenen Formpulver stauben nicht und sind nicht rieselfähig. Wie ein Vergleich mit der Tabelle 1 zeigt, bleiben die Endeigenschaften im wesentlichen erhalten, aber die Schälfolien sind optisch inhomogen, das heißt sie zeigen Flecken unterschiedlicher Transparenz. Solche Folien sind anwendungstechnisch nicht akzeptabel.

### Beispiele 5 bis 10

2,5 kg Formpulver B aus mit 0,05 Gew.-% Perfluor(n-propyl-vinyl)ether modifiziertem Suspensions-PTFE werden mit 4 1 Wasser bei der (in Upm) angegebenen Rührerdrehzahl gerührt. Bei den Beispielen 9 und 10 wurde in Gegenwart von 4 g Ammoniumperfluorcaprylat gearbeitet. Die Ergebnisse zeigt die Tabelle 5.

**Tabelle 5**

| Beispiel | Temperatur [°C] | Upm | Pulvereigenschaften | | Eigenschaften von 100-µm-Schälfolien | | |
|---|---|---|---|---|---|---|---|
| | | | SG | d₅₀ | RF | RD | EDF |
| 5 | 23 | 800 | 530 | 41 | 38,5 | 550 | 106 |
| 6 | 45 | 1200 | 530 | 65 | 40 | 550 | 96 |
| 7 | 45 | 800 | 585 | 64 | 36 | 500 | 85 |
| 8 | 25 | 1000 | 500 | 83 | 42 | 555 | 112 |
| 9 | 25 | 1000 | 450 | 43 | 40 | 540 | 108 |
| 10 | 45 | 1000 | 560 | 70 | 43 | 565 | 99 |

Alle angeführten agglomerierten Formpulver stauben nicht und haben ein deutlich erhöhtes Schüttgewicht. Die Endeigenschaften der Schälfolien bleiben im Vergleich zum Ausgangsmaterial erhalten. Die Folien sind optisch homogen und porenfrei und somit von hoher Qualität.

### Beispiele 11 und 12

Hier wurde ein Formpulver eingesetzt, das mit 0,1 Gew.-% Perfluor(n-propyl-vinyl)ether modifiziert wurde. Gerührt wurde bei 1000 Upm. Die Ergebnisse zeigt die Tabelle 6.

**Tabelle 6**

| Beispiel | Temperatur [°C] | Pulvereigenschaften | | Eigenschaften von 100-µm-Schälfolien | | |
|---|---|---|---|---|---|---|
| | | SG | d₅₀ | RF | RD | EDF |
| Ausgangsmaterial | | 420 | 24 | 42 | 660 | 110 |
| 11 | 25 | 555 | 48 | 38,5 | 590 | 101 |
| 12 | 45 | 650 | 67 | 38 | 585 | 99 |

Auch diese Pulver zeigen die gleichen guten Eigenschaften wie die Produkte nach den Beispielen 5 bis 10.

## Patentansprüche

1. Nichtrieselfähige, nichtstaubende Formpulver mit einem Schüttgewicht von mindestens 450 g/l aus einem Suspensionspolymerisat mit Einheiten des Tetrafluorethylens und 0,01 bis 1 Gew.-% an Einheiten mindestens eines Perfluor(alkyl-vinyl)ethers mit einer Alkylgruppe von 1 bis 4 Kohlenstoffatomen, erhältlich durch Mahlen der Primärpartikel auf einen mittleren Korndurchmesser d₅₀ von 10 bis 50 µm und Reagglomerieren in Wasser zu einem mittleren Agglomeratdurchmesser d₅₀ von 30 bis 100 µm.

2. Formpulver nach Anspruch 1, **dadurch gekennzeichnet, daß** der Gehalt an Perfluor(alkyl-vinyl)ether 0,02 bis 0,5 Gew.-% beträgt.

3. Formpulver nach Anspruch 1 oder 2, **gekennzeichnet durch** einen mittleren Agglomeratdurchmesser d₅₀ von 40 bis 90 µm.

4. Verfahren zur Herstellung eines nichtrieselfähigen, nichtstaubenden Formpulvers mit einem Schüttgewicht von mindestens 450 g/l, **dadurch gekennzeichnet, daß** man ein Suspensionspolymerisat mit Einheiten des Tetrafluorethylens und 0,01 bis 1 Gew.-% an Einheiten mindestens eines Perfluor(alkyl-vinyl)ethers mit einer Alkylgruppe von 1 bis 4 Kohlenstoffatomen auf einen Korndurchmesser d₅₀ von 10 bis 50 µm mahlt und in Wasser zu einem mittleren Agglomeratdurchmesser d₅₀ von 30 bis 100 µm agglomeriert.

5. Verfahren nach Anspruch 4, **dadurch gekennzeichnet, daß** man ein Polymerisat einsetzt, das einen Gehalt an 0,02 bis 0,5 Gew.-% des Ethers enthält.

6. Verfahren nach Anspruch 4 oder 5, **dadurch gekennzeichnet, daß** man auf einen Korndurchmesser d₅₀ von 15 bis 25 µm mahlt.

7. Verfahren nach den Ansprüchen 4 bis 6, **dadurch gekennzeichnet, daß** man einen Agglomeratdurchmesser von 40 bis 90 µm einstellt.

8. Verwendung der Formpulver in der Preß-Sinter-Technik.

## Claims

1. Non-pourable, non-dusting moulding powder having a bulk density of at least 450 g/l of a suspension polymer with units of tetrafluoroethylene and 0.01 to 1 % by weight of units of at least one perfluoro(alkyl-vinyl) ether with an alkyl group of 1 to 4 carbon atoms, obtainable by grinding the primary particles to an average particle diameter d₅₀ of 10 to 50 µm and reagglomerating these particles in water to give an average agglomerate diameter d₅₀ of 30 to 100 µm.

2. Moulding powder according to Claim 1, **characterized in that** the content of perfluoro(alkyl-vinyl) ether is 0.02 to 0.5 % by weight.

3. Moulding powder according to Claim 1 or 2, **characterized by** an average agglomerate diameter d₅₀ of 40 to 90 m.

4. Process for the preparation of a non-pourable, non-dusting moulding powder having a bulk density of at least 450 g/l, **characterized by** grinding a suspension polymer with units of tetrafluoroethylene and 0.01 to 1 % by weight of units of at least one perfluoro(alkyl-vinyl) ether with an alkyl group of 1 to 4 carbon atoms to a particle diameter d₅₀ of 10 to 50 µm and agglomerating the particles in water to give an average agglomerate diameter d₅₀ of 30 to 100 µm.

5. Process according to Claim 4, **characterized in that** a polymer which has a content of 0.02 to 0.5 % by weight of the ether is employed.

6. Process according to Claim 4 or 5, **characterized in that** the polymer is ground to a particle diameter d₅₀ of 15 to 25 µm.

7. Process according to Claims 4 to 6, **characterized in that** an agglomerate diameter of 40 to 90 µm is established.

8. Use of the moulding powder in compaction sintering.

## Revendications

1. Poudres de moulage ne s'écoulant pas librement, ne générant pas de poussières, d'une masse volumique apparente d'au moins 450 g/l, constituées d'un polymérisat en suspension comportant des unités de tétrafluoroéthylène et 0,01 à 1 % en poids d'unités d'au moins un perfluoro(alkylvinyl)éther comportant un groupe alkyle de 1 à 4 atomes de carbone, pouvant être obtenues par broyage des particules primaires à un diamètre moyen de particules d₅₀ de 10 à 50 µm et ré-agglomération dans de l'eau jusqu'à un diamètre d'agglomérat moyen d₅₀ de 30 à 100 µm.

2. Poudres de moulage selon la revendication 1, **caractérisée en ce que** la teneur en perfluoro(alkylvinyl)éther est de 0,02 à 0,5 % en poids.

3. Poudres de moulage selon la revendication 1 ou 2, **caractérisée par** un diamètre d'agglomérat moyen d₅₀ de 40 à 90 µm.

4. Procédé pour la fabrication d'une poudre de moulage ne s'écoulant pas librement, ne générant pas de poussières, d'une masse volumique apparente d'au moins 450 g/l, **caractérisé en ce que** l'on broie un polymérisat en suspension comportant des unités de tétrafluoroéthylène et 0,01 à 1 % en poids d'unités d'au moins un perfluoro(alkylvinyl)éther comportant un groupe alkyle de 1 à 4 atomes de carbone, à un diamètre de particules d₅₀ de 10 à 50 µm, et qu'on l'agglomère dans de l'eau jusqu'à un diamètre d'agglomérat moyen d₅₀ de 30 à 100 µm.

5. Procédé selon la revendication 4, **caractérisé en ce que** l'on utilise un polymérisat qui contient une teneur de 0,02 à 0,5 % en poids de l'éther.

6. Procédé selon la revendication 4 ou 5, **caractérisé en ce que** l'on broie à un diamètre de particules d₅₀ de 15 à 25 µm.

7. Procédé selon les revendications 4 à 6, **caractérisé en ce que** l'on ajuste un diamètre d'agglomérat de 40 à 90 µm.

8. Utilisation de la poudre de moulage dans la technique de compression-frittage.
